# EUROPÄISCHE PATENTSCHRIFT

(11) **EP 1 124 292 B1**
(45) Veröffentlichungstag und Bekanntmachung des Hinweises auf die Patenterteilung: **21.06.2006**
(21) Anmeldenummer: 01103004.6
(22) Anmeldetag: 08.02.2001
(51) Int. Cl.: H01R 13/646, H04N 7/10, H04H 1/02, H04H 1/04

(54) **Antennensignal-Hausverteilnetz für die Übertragung von Fernseh- und/oder Rundfunkprogrammen**
Home distribution apparatus for antenna signals for transmission of television and/or radio programs
Réseau répartiteur de signaux d'antenne pour habitations pour la transmission de programmes de télévision et/ou de radio

(30) Priorität: 10.02.2000 DE 10005763
(43) Veröffentlichungstag der Anmeldung: 16.08.2001
(73) Patentinhaber: Kathrein Werke KG, 83022 Rosenheim (DE)
(72) Erfinder: Häntsch, Ralf, 83064 Raubling (DE); Mann, Burghard, 83059 Kolbermoor (DE)
(74) Vertreter: Flach, Dieter Rolf Paul

(56) Entgegenhaltungen:
- EP-A- 0 371 401
- EP-A- 0 865 119
- WO-A-98/05163
- DE-C- 3 727 864
- DE-C- 3 727 865
- US-A- 4 461 032

## Beschreibung

Die Erfindung betrifft ein Antennensignal-Hausverteilnetz, insbesondere ein Hausverteilnetz für die Übertragung von Fernseh- und/oder Rundfunkprogrammen nach dem Oberbegriff des Anspruches 1.

Hausverteileranlagen zum Empfang von Fernseh- oder Rundfunkprogrammen sind hinlänglich bekannt. So werden beispielsweise durch eine Satellitenantenne die unterschiedlichsten Fernseh- oder Rundfunkprogramme empfangen und in ein Hausverteilnetz eingespeist. Das Antennensignal wird über ein oder mehrere koaxiale Verteilkabel zu Antennensteckdosen geleitet, von denen es die angeschlossenen Teilnehmer abgreifen können. Je nach Bedarf sind im Netz Aufbereitungsanlagen, Umschaltmatrizen, Verteiler, Abzweiger oder Verstärker angeordnet. Zusätzlich kann man terrestrisch ausgestrahlte Programme über weitere Antennen empfangen und in das Verteilnetz einspeisen.

Alternativ oder ergänzend ist es auch möglich, dass die entsprechenden Daten und Programme über ein externes Kabelnetz mit nachgeschaltetem Hausübergabepunkt bereitgestellt werden.

Aus der EP 0 865 119 A2 ist ein entsprechend umfassenderes Verteilnetz bekannt, welches ebenfalls eine oder mehrere von einer Zentrale ausgehende Leitungen umfasst, in der jeweils eine oder mehrere in Serie geschaltete Anschlussdosen vorgesehen sind. An den Anschlussdosen können dann eine oder mehrere von außen zugängliche Anschlusselemente ausgebildet sein, um es hier einem Teilnehmer zu ermöglichen, einen oder mehrere der bereitgestellten Dienste empfangen oder nutzen zu können. Dies kann gleichermaßen auch für entsprechende Rückleitungen gelten.

AUS EP-A- 0 371401 ist ein Verteiler bekannt mit dem komplette, in dresen Verteiler beginnende Leitungen zu oder abgeschaltet werden können.

Obgleich der Grundaufbau derartiger Hausverteileranlagen bekannt ist, treten in der Praxis und im Betrieb derartiger Anlagen gleichwohl zahlreiche Probleme auf.

Aufwendig sind Änderungen am Netz, da jeder koaxiale Verteilstrang durch spezielle Antennensteckdosen oder Geräte wellenwiderstandsgerecht abgeschlossen werden muss. So ist es bei einer späteren Verlängerung oder Ausweitung eines Stranges notwendig, den Abschlusswiderstand neu zu positionieren.

Anlagen mit modularen Funktionsbausteinen bereiten Schwierigkeiten, insbesondere wenn mehrere Anschlussdosen in Reihe geschalten sind, weil keine Möglichkeit besteht, dem Nutzer oder Installateur unzulässige Anordnungen von Anschlussdosen oder Funktionsmodulen anzuzeigen. Ein weiterer Nachteil bekannter Verteilanlagen besteht darin, dass nicht genutzte Teilnehmerausgänge elektromagnetische Energie abstrahlen, wenn sie nicht durch Abschirmkappen verschlossen werden. Die Anlagendichtigkeit ist somit von der Sorgfalt der Teilnehmer abhängig und kann vom Anlagenbetreiber nicht beeinflusst werden.

Schließlich ist es in vielen Fällen zum anderen auch wünschenswert, einen Überblick zu bewahren, an welchen Anschlussdosen welche Teilnehmer zum Empfang welcher Dienste oder zur Einspeisung von Rückinformationen zugeschaltet sind bzw. zugeschaltet sein sollen oder dürfen.

Die Aufgabe der vorliegenden Erfindung ist es von daher, ausgehend von dem gattungsbildenden Stand der Technik ein verbessertes Antennensignal-Hausverteilnetz mit verbesserten Anschlussdosen zu schaffen, dessen Aufbau, Ausbau, Wartung und Betrieb einfacher als bisher ist.

Die Aufgabe wird erfindungsgemäß bezüglich des Verteilnetzes entsprechend den im Anspruch 1 Vorteilhafte Ausgestaltungen der Erfindung sind in den Unteransprüchen angegeben.

Eine deutliche Verbesserung gegenüber herkömmlichen Lösungen wird in dem erfindungsgemäßen Verteilnetz dadurch erzielt, dass die Anschlussdosen in dem Verteilnetz mit elektrischen und/oder mechanischen Adressbausteinen so ausgerüstet sind, dass alle Anschlussdosen im Verteilnetz von einer Steuerungseinheit oder Zentrale aus eindeutig identifizierbar sind.

In einer bevorzugten Ausführungsform der Erfindung kann nicht nur das Erkennungssignal bzw. die Adresse jeder Antennensteckdose von der zentralen Steuereinheit aus erfasst und/oder abgefragt werden, sondern ggf. auch verändert und damit eingestellt werden.

Abgesehen davon, dass die Adressierung der einzelnen Anschlussdosen elektrisch und/oder mechanisch erfolgen kann, ist es ebenso möglich, dass beispielsweise die Anschlussdosen bereits herstellerseitig mit einem Adressbaustein ausgestattet werden, der einen eindeutigen Identifikationscode sendet, wobei der Identifikationscode nicht mehr veränderbar und/oder einstellbar, wohl aber lesbar ist.

Alternativ oder ergänzend hat es sich als besonders günstig erwiesen, wenn die Anschlussdosen zusätzlich mit einem von der Zentrale aus durch den Adressbaustein eindeutig ansteuerbaren Schaltelement ausgerüstet werden, das den HF-Signalfluss unterbrechen kann, insbesondere wenn das Schaltelement zugleich den Koaxialleitungsstrang wellenwiderstandsgerecht abschließt.

Der bei den beschriebenen Varianten für das Identifizieren einer Dose notwendige Datenaustausch zwischen Zentrale und dem Adressbaustein sowie die Schaltsignalübertragung erfolgen über die koaxialen Verteilkabel, jedoch in einem Frequenzbereich, der die Übertragung der Fernseh- und Rundfunkprogramme nicht beeinträchtigt.

Bei Antennensignal-Hausverteilanlagen mit solchen Antennensteckdosen kann auf einfache Weise ein koaxialer Verteilstrang verlängert oder verkürzt werden, indem von der Zentrale aus in der ursprünglich letzten und in der neuen letzten Dose des Stranges das Schaltelement betätigt wird.

Ein derartiges technisches Merkmal erlaubt es auch, nicht benötigte Teilnehmerschnittstellen und Leitungsstränge von der Zentrale aus abzukoppeln und so die Schirmdichtigkeit einer Verteilanlage zu erhöhen.

Vorteile ergeben sich in Anlagen mit eindeutig identifizierbaren Antennensteckdosen, wenn eine Gebührenabrechnung erfolgen soll. Es ist in der Zentrale genau feststellbar, wann und welche Programme oder multimedialen Dienste über eine Anschlussdose von einem Teilnehmer empfangen worden sind. Sind Adressbausteine und Schaltelemente den Teilnehmerausgängen zugeordnet, sind unpünktliche Zahler von der Zentrale aus und somit ohne Betreten der Wohneinheiten ohne großen Aufwand vom Netz trennbar.

Die erfindungsgemäße Verteilanlage ermöglicht letztlich insbesondere auch unter Zuschaltung eines Mikroprozessors in der Zentraleinheit, dass von dieser Steuerungseinheit oder Zentrale aus eine Kommunikation mit allen und insbesondere mit den in Reihe geschalteten Anschlussdosen sowie zwischen Anschlussdosen möglich ist.

Zudem sind von der Zentral- oder Steuerungseinheit aus die unterschiedlichsten Abfragen realisierbar, wodurch Fehler erkannt und angezeigt werden können, etwa dann, wenn der Signalpegel im Verteilnetz oder in einer bestimmten Leitung zu niedrig ist bzw. zu stark abgefallen ist. In einem solchen Fall ist eine automatische Pegelanpassung durchführbar.

Ebenso sind Installationsfehler bei der Überprüfung und Abnahme einer Verteilanlage schnell und eindeutig lokalisierbar.

Schließlich ist eine intelligente zentrale Steuereinheit in der Lage, zu erkennen, ob bei modularen Anlagen in einen Leitungsstrang eine unzulässige Funktionsmodulkonfiguration gesteckt worden ist. Bei einem erfindungsgemäßen Hausverteilnetz kann von der Zentrale oder Steuerungseinheit aus nach einer Analyse der bereits angeschlossenen Dosen und/oder Funktionsmodule sowie der Verbindungskabellängen dem Nutzer mitgeteilt werden, ob das Einfügen eines zusätzlichen Moduls bzw. einer neuen Anschlussdose noch möglich ist oder ob der Signalpegel für einen derartigen Fall nicht ausreicht.

Schließlich gestattet es ein derartiges Netz aber auch, problemlos Zugriffsrechte unterschiedlich zu verteilen, zu ändern und/oder zu vergeben bzw. Programmpakete nur an bestimmte Dosen zu leiten.

Durch die erwähnte Abschaltung von nicht benötigten Anschlussdosen, beispielsweise mittels eines bistabilen HF-Relais oder eines anderen geeigneten elektronischen oder elektrischen Schalters, ergibt sich insbesondere in Hotels, Krankenhäusern, Bürohäusern etc. die Möglichkeit, für die gesamte Anlage eine deutlich verbesserte Abschirmung zu realisieren. Dabei kann das Ab- oder Zuschalten von Antennensteckdosen oder Teilnehmerschnittstellen im gesamten Haus, in bestimmten Etagen, in bestimmten Zimmern oder nur einzeln erfolgen und beispielsweise von der Zentrale aus durch eine Zeitschaltuhr gesteuert werden. Schließlich ermöglicht dies auch, in einem Haus eine "Kindersicherung" zu verwirklichen, um beispielsweise in Kinderzimmern eine Anschlussdose in bestimmten Zeiten und/oder nur mit bestimmten Diensten zuzuschalten.

Eine erfindungsgemäße Anlage gestattet auch die Reihenschaltung mehrerer Receiver, da im Gegensatz zu herkömmlichen Netzen der Ursprung der Receiverschaltsignale lokalisierbar ist und genau dorthin die gewünschten Daten gesendet werden können.

Zusammenfassend lässt sich allgemein festhalten, dass die erfindungsgemäße Antennensignal-Hausverteilanlage die schnelle Inventarisierung und Kompatibilitätsprüfung aller Netzkomponenten gestattet, die einfache Archivierung bzw. Dokumentation der Anlagenstruktur erlaubt sowie eine bequeme Erweiterung bzw. Veränderung der Verteilstränge zulässt.

Die Erfindung wird nachfolgend anhand mehrerer Ausführungsbeispiele erläutert. Dabei zeigen im einzelnen
- Figur 1 :: eine schematische Darstellung einer Antennensignal-Hausverteilanlage zum Empfang von Fernseh- und/oder Rundfunkprogrammen;
- Figur 2 :: eine schematische Querschnittsdarstellung durch eine Anschlussdose zur Erläuterung des prinzipiellen Aufbaus;
- Figur 3 :: ein zu Figur 1 abgewandeltes Ausführungsbeispiel mit modular aufgebauten Anschlussdosen;
- Figur 4 :: ein zu Figur 1 abgewandeltes Ausführungsbeispiel mit zum koaxialen Programmübertragungskabel parallel verlegtem Datenkabel;
- Figur 5 :: ein zu Figur 1 abgewandeltes Ausführungsbeispiel mit ringförmigen Leitungssträngen; und
- Figur 6 :: ein zu Figur 5 abgewandeltes Ausführungsbeispiel mit vernetzten Leitungssträngen.

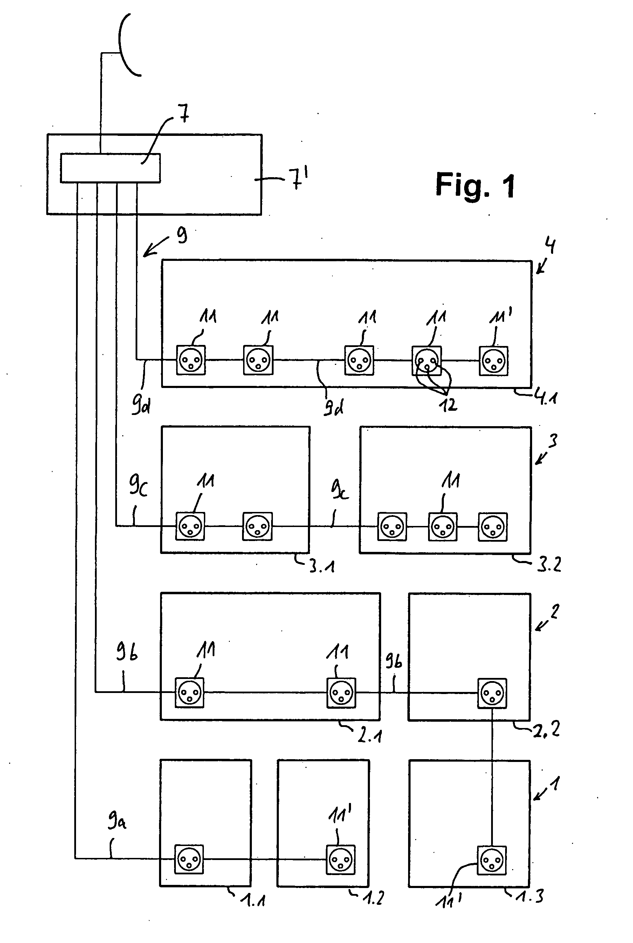

In Figur 1 ist eine Antennensignal-Hausverteilanlage zum Empfang von Fernseh- und/oder Rundfunkprogrammen gezeigt.

Die Programme werden von einer Antenne 5 empfangen und in eine zentrale Steuereinheit 7 geleitet, wo sie auf einen oder mehrere koaxiale Leitungsstränge 9 verteilt werden.

Im Ausführungsbeispiel sind vier Leitungen 9a bis 9d verlegt, die zu unterschiedlichen Stockwerken 1 bis 4 und/oder Zimmern 1.1 bis 4.1 führen.

In jeder der Leitungen 9a bis 9d sind mehrere Anschlussdosen vorgesehen, wobei in den ersten Dosen 11 eines Stranges das HF-Signal durchgeschleift und in der letzten Dose 11' eines Stranges die Koaxialleitung wellenwiderstandsgerecht abgeschlossen wird. Ebenso sind Leitungsstränge mit nur einer Enddose 11' realisierbar.

Zumindest ein Teil der Anschlussdosen 11, 11' besitzt Teilnehmerschnittstellen 12, von denen der Nutzer das Antennensignal abgreifen kann.

Alle Anschlussdosen 11, 11' des Verteilnetzes sind mit Adressbausteinen 21 so ausgerüstet, dass sie von der Zentrale 7' mit der zentralen Steuereinheit 7 aus mittels einer dort plazierten Kommunikationseinheit eindeutig identifiziert und angesprochen werden können. Die Adresse der Dose kann bereits herstellerseitig unveränderlich eingestellt oder vom Monteur nach der Installation der Anlage vergeben werden. Als Adressbaustein 21 sind sowohl mechanische als auch elektronische Bauelemente geeignet.

In die Dosen 11, 11' sind zusätzlich Schaltelemente 23 integriert, mit denen von der Zentrale aus der HF-Signalfluss unterbrochen oder wieder hergestellt und der weiterführende Leitungsstrang wellenwiderstandsgerecht abgeschlossen werden kann.

Dadurch ist es möglich, nach Installation der Anlage von der Zentrale 7 aus einen Leitungsstrang durch Betätigen des Schalters 23 in der letzten Dose 11' verlustfrei abzuschließen. Ebenso sind Leitungsstränge einfach erweiterbar. Hierzu müssen nur in der bisherigen letzten Dose 11' und in der neuen letzten Dose des Stranges die Schaltelemente betätigt werden.

In der beschriebenen Anlage sind nicht benötigte Verteilnetzabschnitte auf elegante Weise abschaltbar, wodurch die Störstrahlaussendung des Netzes reduzierbar ist.

Der für die Kommunikation zwischen Zentrale 7, Adressbausteinen 21 und Schaltelementen 23 notwendige Datenaustausch findet über das koaxiale Verbindungskabel 9 in einem für die Übertragung der Fernseh- und Rundfunkprogramme nicht genutzten Frequenzbereich statt.

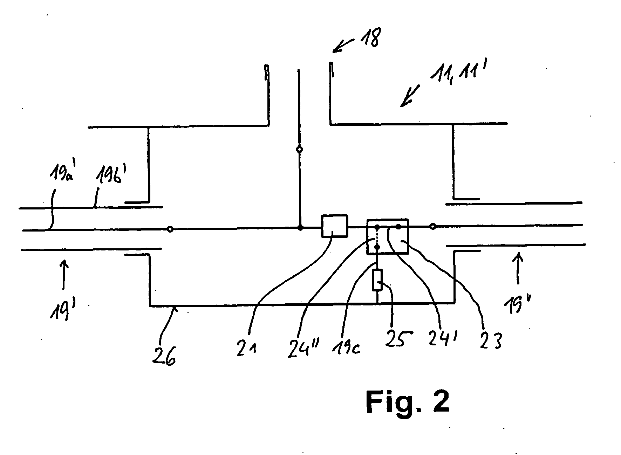

Figur 2 zeigt schematisch den Aufbau einer Anschlussdose 11, 11'. Das Antennensignal wird über ein ankommendes Koaxialkabel 19', d.h. über den Innenleiter 19a' in die Antennensteckdose 11, 11' geleitet und dort beispielsweise über eine Leiterplattenschaltung an eine oder mehrere Teilnehmerschnittstellen 18 und an ein weiterführendes Koaxialkabel 19" verteilt. Im Signalweg sind der Adressbaustein 21 und das Schaltelement 23 - beispielsweise ein über eine Gleichspannung bedienbares bistabiles Hochfrequenz-Relais - angeordnet, so dass über das Koaxialkabel 19' eine Kommunikation zwischen Zentrale und den Bauteilen 21 und 23 möglich ist.

Durch einen von der Zentrale 7 gesendeten Schaltbefehl kann im Schaltelement 23 der Leiterabschnitt 24' aufgetrennt und der Leiterabschnitt 24" in einer Zweigleitung 19c geschlossen werden, wodurch die Verbindung zum wegführenden Kabel 19" unterbrochen und zwischen Innenleiter 19a' und Außenleiter 19b' des hinführenden Leitungsstranges 19' ein Abschlusswiderstand 25 über eine Zwischenleitung 26, z.B. in Form einer Gehäuseleitung geschalten wird, der dem Wellenwiderstand der Koaxialleitung entspricht. Dieser Schaltvorgang ist umkehrbar, damit eine Abschlussdose wieder in eine Durchgangsdose wandelbar ist.

In der in Figur 2 dargestellten Antennensteckdose 11, 11' sind ein Adressbaustein 21 und ein Schaltelement 23 vorgesehen. Genauso können für die Teilnehmeranschlüsse 18 oder bestimmte Funktionsgruppen auf der Leiterplatte Adressbausteine 21 und Schaltelemente 23 plaziert werden, um von der Zentrale gezielt Teilnehmerschnittstellen oder Funktionsgruppen ab- oder zuschalten zu können.

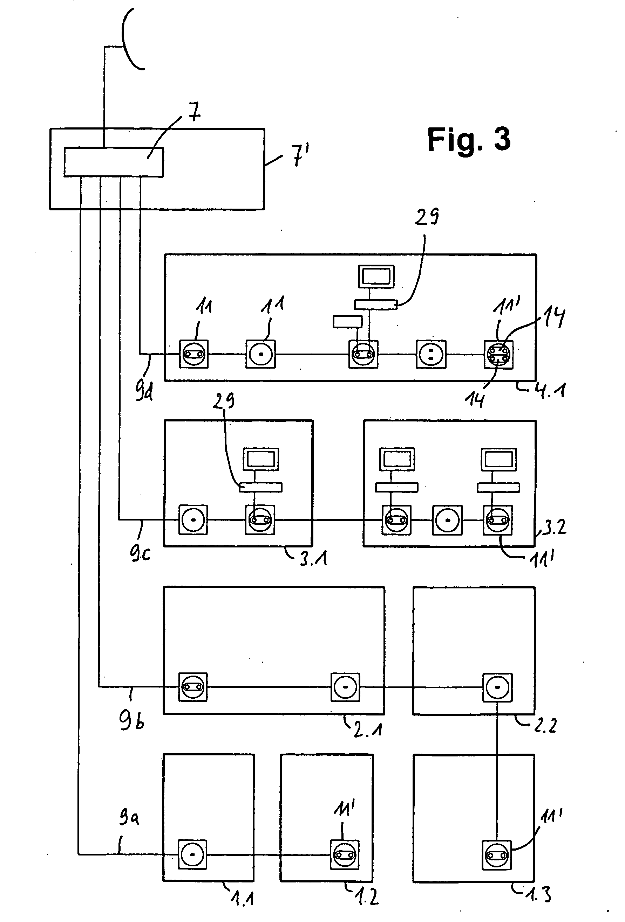

In Figur 3 ist eine Hausverteilanlage mit modular aufgebauten Anschlussdosen 11, 11' abgebildet, wo der Nutzer die Möglichkeit hat, Funktionsbausteine 14 seinen Wünschen entsprechend zu setzen oder auszutauschen. Natürlich ist auch jedes Funktionsmodul mit einer eindeutigen Adresse und einem Schaltelement versehen ausstattbar und somit von der Zentrale aus ab- und zuschaltbar.

Durch die eindeutige Identifizierbarkeit einer Anschlussdose 11, 11', eines Funktionsmoduls 14 oder einer Teilnehmerschnittstelle 12 im Netz ist es zudem möglich, mehrere Receiver 29 in einem Leitungsstrang in Reihe zu schalten. Die Zentrale 7 ist in der Lage, die Schaltbefehle der Receiver 29 zu lokalisieren und genau dorthin die gewünschten Programmdaten senden.

Eine intelligente Zentrale kann erkennen, ob eine unzulässige Funktionsmodulkonfiguration gesteckt wurde bzw. ob eine Erweiterung mit neuen Funktionsbausteinen 14 zu Fehlern führt.

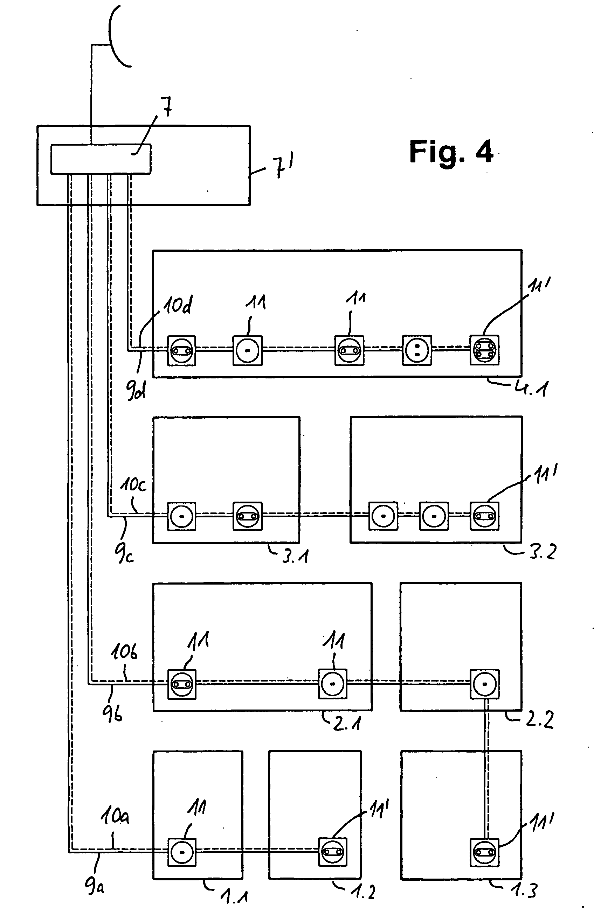

Im Ausführungsbeispiel nach Figur 4 ist eine Hausverteilanlage wiedergegeben, bei der parallel zu den koaxialen Kabelsträngen 9a bis 9d für die Programmübertragung noch zusätzliche Datenkabel 10a bis 10d verlegt sind. Bei einer derartigen Anlage ist es möglich, diese Datenkabel 10a bis 10d für die zur Kommunikation zwischen Zentrale 7, Adressbausteinen 21 und Schaltelementen 23 notwendigen Datenübertragungen zu nutzen.

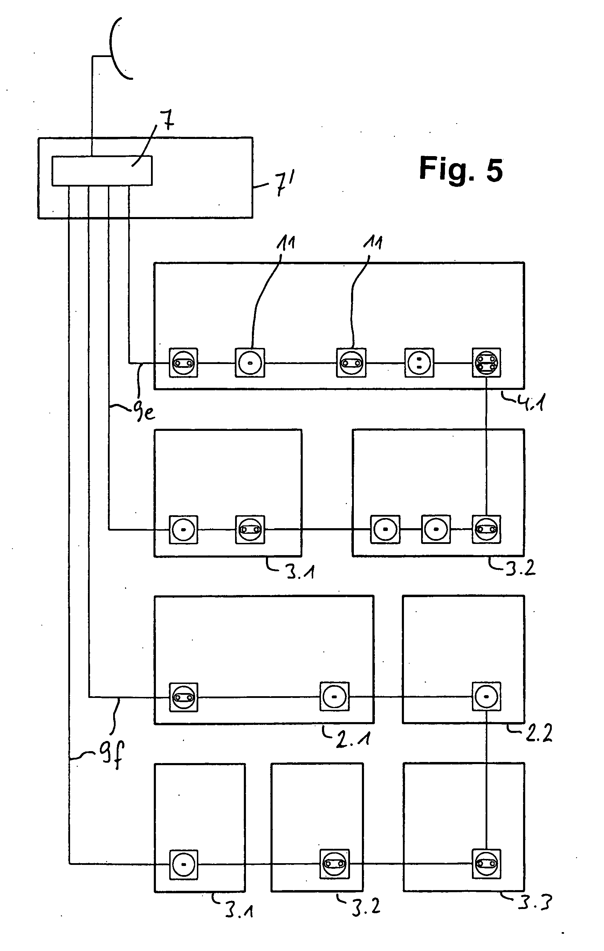

In Figur 5 ist eine Anlage aufgezeigt, in der die koaxialen Leitungsstränge 9e und 9f in der Zentrale beginnen und enden, also ringförmig aufgebaut sind. Der Installateur kann eine Ringleitung von der Zentrale durch Betätigen von Schaltelementen auftrennen und dadurch zwei separate, in der Zentrale 7 beginnende Leitungsstränge aufbauen, deren Länge je nach Bedarf später veränderbar ist.

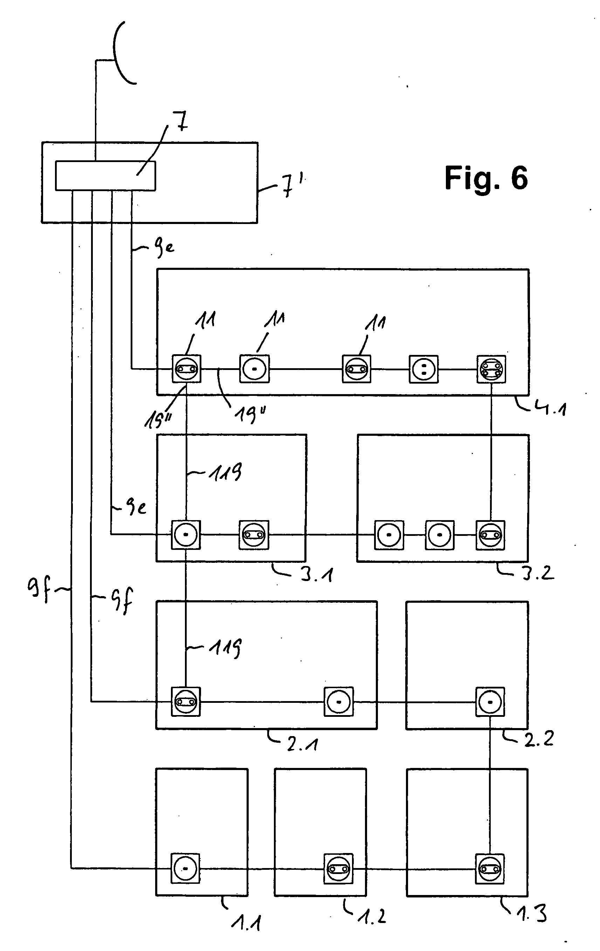

Bei der Ausführungsvariante nach Figur 6 sind gegenüber dem vorhergehenden Beispiel zusätzliche Leitungen zwischen den Zimmern 4.1 und 3.1 sowie 3.1 und 2.1 verlegt. Durch eine derartige Netzstruktur ist ein Haus universell verkabelbar.

Ordnet man jeder weiterführenden Leitung 19" einer Anschlussdose 11" einen Adressbaustein 21 und ein Schaltelement 23 zu, besitzen der Monteur oder eine intelligente Zentrale eine große Flexibilität, durch Betätigen der Schaltelemente, beispielsweise bei zu niedrigem Signalpegel oder bei Änderung der Nutzungsstruktur des Gebäudes, den Erfordernissen entsprechende Leitungsstränge zu konfigurieren bzw. abzuändern.

## Patentansprüche

1. Antennensignal-Hausverteilnetz für die Übertragung von Fernseh- und/oder Rundfunkprogrammen mit den folgenden Merkmalen
- ein Antennensignal wird einer Zentrale (7) zugeführt,
- von der Zentrale (7) aus verläuft zumindest ein koaxialer Leitungsstrang (9) zu den Antennensteckdosen (11, 11'),
- in jedem Leitungsstrang (9a bis 9d) ist mindestens eine Antennensteckdose (11, 11') angeschlossen,
- in den Anschlussdosen (11, 11') ist zumindest ein von der Zentrale (7) aus betätigbares Schaltelement (23) mit einem zugehörigen Adressbaustein (21) plaziert,
**gekennzeichnet durch** die folgenden weiteren Merkmale:
- die Länge der Leitungsstränge (9a bis 9d) ist von der Zentrale (7) aus **durch** Betätigung eines betreffenden Schaltelementes (23) veränderbar.

2. Antennensignal-Hausverteilnetz nach Anspruch 1, **dadurch gekennzeichnet, dass** jede Anschlussdose (11, 11') bzw. jedes Schaltelement (23) über die Adressbausteine (21) von der Zentrale (7) aus eindeutig identifizierbar ist.

3. Verteilnetz nach Anspruch 1 oder 2, **dadurch gekennzeichnet, dass** die Anschlussdose (11, 11') wahlweise von einer Durchgangsdose (11) in eine Enddose (11') oder von einer Enddose (11') in eine Durchgangsdose (11) umschaltbar ist.

4. Verteilnetz nach Anspruch 1 bis 3, **dadurch gekennzeichnet, dass** beim Umschalten von einer Durchgangsdose (11) auf eine Enddose (11') der Koaxialkabelstrang wellenwiderstandsgerecht abgeschlossen wird.

5. Verteilnetz nach einem der Ansprüche 1 bis 4, **dadurch gekennzeichnet, dass** zumindest eine als Durchgangsdose geschaltete Antennensteckdose (11) mehrere Ausgangsleitungen (19") aufweist, die wahlweise durch das Schaltelement (23) mit der Eingangsleitung (19') verbindbar sind.

6. Verteilnetz nach einem der Ansprüche 1 bis 5, **dadurch gekennzeichnet, dass** zumindest in einem Teil der Anschlussdosen (11, 11') Funktionsmodule (14) einsteckbar sind, die mit Adressbausteinen (21) und/oder Schaltelementen (23) ausgerüstet sind.

7. Verteilnetz nach einem der Ansprüche 1 bis 6, **dadurch gekennzeichnet, dass** zumindest ein Teil der Teilnehmerschnittstellen (18) mit Adressbausteinen (21) oder Schaltelementen (23) bestückt sind und die Teilnehmerschnittstellen (18) von der Zentrale (7) aus wahlweise zu- oder abschaltbar sind.

8. Verteilnetz nach einem der Ansprüche 1 bis 7, **dadurch gekennzeichnet, dass** zumindest ein Leitungsstrang (9) in der Zentrale (7) beginnt und endet, so dass über die Zentrale (7) durch Betätigen von Schaltelementen (23) zwei separate, in der Zentrale (7) beginnende Leitungsstränge (9e, 9f) erzeugbar sind, deren Länge vorzugsweise veränderbar ist.

9. Verteilnetz nach einem der Ansprüche 1 bis 8, **dadurch gekennzeichnet, dass** die Leitungsstränge (9) vernetzt sind und von der Zentrale (7) aus durch Betätigen von Schaltelementen (23) in der Zentrale beginnende Leitungsstränge konfigurierbar sind.

10. Verteilnetz nach einem der Ansprüche 1 bis 9, **dadurch gekennzeichnet, dass** der für die Kommunikation zwischen Zentrale (7), Adressbausteinen (21) und Schaltelementen (23) notwendige Datenaustausch über die koaxialen Verteilkabel (9) in einem für die Programmsignalübertragung nicht genutzten Frequenzbereich durchführbar ist.

11. Verteilnetz nach einem der Ansprüche 1 bis 10, **dadurch gekennzeichnet, dass** der für die Kommunikation zwischen Zentrale (7), Adressbausteinen (21) und Schaltelementen (23) notwendige Datenaustausch über parallel zu den Koaxialkabeln (9) verlegte Datenkabel durchführbar ist.

12. Verteilnetz nach einem der Ansprüche 1 bis 11, **dadurch gekennzeichnet, dass** der Adressbaustein (21) bereits herstellerseitig mit einem eindeutigen Erkennungscode versehen ist, der von der Zentrale (7, 7') lesbar, durch die Zentrale (7, 7') aber nicht veränderbar ist.

## Claims

1. Antenna signal house distribution network for the distribution of television and/or radio programmes with the following features:
- an antenna signal is conducted to a central unit (7),
- running out from the central unit (7) is at least one coaxial line strand (9) to the antenna sockets (11, 11'),
- connected to each line strand (9a to 9d) is at least one antenna socket (11, 11'),
- located in the connection sockets (11, 11') is at least one switching element (23) with an address module (21) belonging to it, capable of being actuated from the central unit (7), **characterised by** the following further features:
- the length of the line strands (9a to 9d) can be changed from the central unit (7) by actuation of a pertinent switching element (23).

2. Antenna signal house distribution network according to Claim 1, **characterised in that** each connection socket (11, 11') and each switching element (23) is unambiguously identifiable from the central unit (7) via the address modules (21).

3. Distribution network according to Claim 1 or 2, **characterised in that** the connection socket (11, 11') can be switched optionally from a throughway box (11) into a terminal box (11') or from a terminal box (11') into a throughway box (11).

4. Distribution network according to one of Claims 1 to 3, **characterised in that**, at the switchover from a throughway box (11) into a terminal box (11'), the coaxial strand is closed in a manner suitable for surge (wave) impedance.

5. Distribution network according to one of Claims 1 to 4, **characterised in that** at least one antenna socket (11) switched as a throughway box exhibits several output lines (19"), which can be optionally connected to the input line (19') by the switching element (23).

6. Distribution network according to one of Claims 1 to 4, **characterised in that** at least in a part of the connection sockets (11, 11') function modules (14) can be plugged in which are fitted with address modules (21) and/or switching elements (23).

7. Distribution network according to one of Claims 1 to 6, **characterised in that** at least a part of the subscriber interfaces (18) are fitted with address modules (21) or switching elements (23) and the subscriber interfaces (18) can be switched on or off optionally from the central unit (7).

8. Distribution network according to one of Claims 1 to 7, **characterised in that** at least one line strand (9) begins and ends in the central unit (7), with the result that via the central unit (7) by the actuation of switching elements (23) two separate line strands (9e, 9f) can be created, starting in the central unit (7), the length of which can for preference be changed.

9. Distribution network according to one of Claims 1 to 8, **characterised in that** the line strands (9) are networked and can be configured from the central unit (7) by the actuation of switching elements (23) in the line strands beginning in the central unit.

10. Distribution network according to one of Claims 1 to 9, **characterised in that** the data exchange necessary for the communications between the central unit (7), address modules (21) and switching elements (23) can be carried out via the coaxial distribution cable (9) in a frequency range not used for the program signal transfer.

11. Distribution network according to one of Claims 1 to 10, **characterised in that** the data exchange necessary for the communications between the central unit (7), address modules (21), and switching elements (23) can be carried out via data cables laid parallel to the coaxial cables (9) .

12. Distribution network according to one of Claims 1 to 11, **characterised in that** the address module (21) is already provided by the manufacturers with an unambiguous identification code, which is readable from the central unit (7, 7') but which cannot be changed by the central unit (7, 7').

## Revendications

1. Réseau répartiteur de signaux d'antenne pour habitation, destiné à la transmission de programmes de télévision et/ou de radio, comportant les éléments suivants :
- un signal d'antenne est amené à une unité centrale (7),
- au moins un brin de ligne coaxiale (9) s'étend de l'unité centrale (7) vers les prises d'antenne (11, 11'),
- au moins une prise d'antenne (11, 11') est raccordée dans chaque brin de ligne (9a à 9d),
- au moins un élément de commutation (23) susceptible d'être actionné depuis l'unité centrale (7) et comprenant un composant d'adressage associé (21) est placé dans les prises de raccordement (11, 11'),
**caractérisé par** les caractéristiques suivantes :
- la longueur des brins de ligne (9a à 9d) est modifiable depuis l'unité centrale (7) par actionnement d'un élément de commutation concerné (23).

2. Réseau répartiteur de signaux d'antenne selon la revendication 1, **caractérisé en ce que** chaque prise de raccordement (11, 11') ou respectivement chaque élément de commutation (23) est identifiable de façon univoque depuis l'unité centrale (7) au moyen des composants d'adressage (21).

3. Réseau répartiteur de signaux selon la revendication 1 ou 2, **caractérisé en ce que** la prise de raccordement (11, 11') est susceptible d'être commutée au choix d'une prise traversante (11) à une prise terminale (11') ou d'une prise terminale (11') à une prise traversante (11).

4. Réseau répartiteur de signaux selon les revendications 1 à 3, **caractérisé en ce que** lors de la commutation d'une prise traversante (11) à une prise terminale (11'), le brin de câble coaxial est terminé par une résistance adaptée.

5. Réseau répartiteur de signaux selon l'une des revendications 1 à 4, **caractérisé en ce qu'**au moins une prise d'antenne (11) commutée en prise traversante comporte plusieurs lignes de sortie (19"), qui peuvent être reliées au choix à la ligne d'entrée (19') par l'élément de commutation (23).

6. Réseau répartiteur de signaux selon l'une des revendications 1 à 5, **caractérisé en ce que**, au moins dans une partie des prises de raccordement (11, 11'), peuvent être enfichés des modules fonctionnels (14) qui sont équipés avec des composants d'adressage (21) et/ou des éléments de commutation (23).

7. Réseau répartiteur de signaux selon l'une des revendications 1 à 6, **caractérisé en ce qu'**au moins une partie des interfaces utilisateurs (18) sont équipées de composants d'adressage (21) ou d'éléments de commutation (23), et les interfaces utilisateurs (18) peuvent être au choix mises en service ou hors service depuis l'unité centrale (7).

8. Réseau répartiteur de signaux selon l'une des revendications 1 à 7, **caractérisé en ce qu'**au moins un brin de ligne (9) commence et se termine dans l'unité centrale (7), de telle manière que, au moyen de l'unité centrale (7) et par actionnement d'éléments de commutation (23), il est possible de générer deux brins de ligne séparés (9e, 9f) qui commencent dans l'unité centrale (7) et dont les longueurs sont de préférence modifiables.

9. Réseau répartiteur de signaux selon l'une des revendications 1 à 8, **caractérisé en ce que** les brins de ligne (9) sont mis en réseau et peuvent être configurés depuis l'unité centrale (7) par actionnement d'éléments de commutation (23) des brins de lignes commençant dans l'unité centrale.

10. Réseau répartiteur de signaux selon l'une des revendications 1 à 9, **caractérisé en ce que** l'échange de données nécessaire pour la communication entre l'unité centrale (7), les composants d'adressage (21) et les éléments de commutation (23) peut être exécuté via le câble répartiteur coaxial (9) dans une plage de fréquences qui n'est pas utilisée pour la transmission des signaux de programmes.

11. Réseau répartiteur de signaux selon l'une des revendications 1 à 10, **caractérisé en ce que** l'échange de données nécessaire pour la communication entre l'unité centrale (7), les composants d'adressage (21) et les éléments de commutation (23) peut être exécuté via un câble de données posé en parallèle aux câbles coaxiaux (9).

12. Réseau répartiteur de signaux selon l'une des revendications 1 à 11, **caractérisé en ce que** le composant d'adressage (21) est pourvu, déjà du côté fabrication, d'un code de reconnaissance univoque, qui est lisible par l'unité centrale (7, 7'), mais qui n'est pas modifiable par l'unité centrale (7, 7').
